# EUROPÄISCHE PATENTSCHRIFT

(11) **EP 3 297 873 B1**
(45) Veröffentlichungstag und Bekanntmachung des Hinweises auf die Patenterteilung: **16.10.2019**
(21) Anmeldenummer: 16723329.5
(22) Anmeldetag: 11.05.2016
(51) Int. Cl.: B60R 25/24, G07C 9/00, G06Q 10/08

(54) **VERFAHREN UND VORRICHTUNG ZUR FREIGABE EINES ZUGANGS ZU EINEM INNENRAUM EINES KRAFTFAHRZEUGS, INSBESONDERE ZUR ÜBERMITTLUNG EINER WARENSENDUNG**
METHOD AND DEVICE FOR ENABLING ACCESS TO A PASSENGER COMPARTMENT OF A MOTOR VEHICLE, IN PARTICULAR FOR CONVEYING A CONSIGNMENT OF GOODS
PROCÉDÉ ET DISPOSITIF POUR AUTORISER UN ACCÈS À UN HABITACLE D'UN VÉHICULE AUTOMOBILE, EN PARTICULIER POUR FAIRE PARVENIR UN ENVOI DE MARCHANDISES

(30) Priorität: 22.05.2015 DE 102015209482
(43) Veröffentlichungstag der Anmeldung: 28.03.2018
(73) Patentinhaber: Robert Bosch GmbH, 70442 Stuttgart (DE)
(72) Erfinder: ROUS, Martin, 74395 Mundelsheim (DE); HOFSAESS, Volker, 71696 Moeglingen (DE)
(86) Internationale Anmeldenummer: PCT/EP2016/060550
(87) Internationale Veröffentlichungsnummer: WO 2016/188751

(56) Entgegenhaltungen:
- DE-A1- 19 904 737
- DE-A1-102011 018 901
- DE-A1-102011 089 496
- JP-A- 2006 206 225
- JP-A- 2008 030 670
- US-A1- 2014 022 051
- US-A1- 2015 116 107
- Volvo Car Group: "Volvo Cars demonstrates the potential of connected cars with deliveries direct to people's cars - Volvo Car Group Global Media Newsroom", , 20. Februar 2014 (2014-02-20), XP055191575, Gefunden im Internet: URL:https://www.media.volvocars.com/global /en-gb/media/pressreleases/139114/volvo-ca rs-demonstrates-the-potential-of-connected -cars-with-deliveries-direct-to-peoples-ca rs [gefunden am 2015-05-26]
- Anonymous: "Amazon, Audi, and DHL want to turn a car trunk into a delivery locker | Ars Technica", , 22. April 2015 (2015-04-22), XP055293128, Gefunden im Internet: URL:http://arstechnica.com/business/2015/0 4/amazon-audi-and-dhl-want-to-turn-a-car-t runk-into-a-delivery-locker/ [gefunden am 2016-08-03]

## Beschreibung

Die vorliegende Erfindung betrifft ein Verfahren und eine Vorrichtung zur Freigabe zu einem Innenraum eines Kraftfahrzeugs insbesondere zur Übermittlung einer Warensendung.

Die DE10 2011 089 496 A1 zeigt ein System und Verfahren zur Übermittlung von Warensendungen in Kraftfahrzeugen, bei dem der Zugang zu dem Kraftfahrzeug durch eine Kommunikation zwischen dem Lieferanten, dem Fahrer und einem Steuergerät des Fahrzeugs ermöglicht wird.

Die vorliegende Erfindung geht aus von einem Gegenstand wie er der JP 2006206225 A zu entnehmen ist.

### Offenbarung der Erfindung

Die vorliegende Erfindung geht aus von einer Vorrichtung bzw. von einem Verfahren zur Freigabe eines Zugangs zu einem Innenraum eines Kraftfahrzeugs, wobei das Kraftfahrzeug wenigstens einen, das Umfeld und/oder den Innenraum des Kraftfahrzeugs erfassenden Sensor aufweist.

Der Kern der vorliegenden Erfindung besteht darin, dass auf eine von außerhalb des Kraftfahrzeugs kommende Freigabeanforderung die Freigabe wenigstens abhängig von der Erfassung des Sensors geschieht. Die Erfindung bietet vorteilhafterweise einen sicheren Zugang zu den Innenraum eines Kraftfahrzeugs.

In einer ersten Ausgestaltung der Erfindung ist vorgesehen, dass wenigstens abhängig von der Erfassung des Sensors eine Gefahrengröße ermittelt wird, die die Gefahr für einen unberechtigten Zugriff auf eine in das Kraftfahrzeug zu übermittelnde Warensendung und/oder auf den Innenraum des Kraftfahrzeugs repräsentiert. Die Freigabe geschieht dann abhängig von der Gefahrengröße. Die Gefahrengröße kann dabei die Präsenz von Personen im Umfeld des Kraftfahrzeug des Kraftfahrzeugs repräsentiert. Das Umfeld kann dabei vorgegeben sein, beispielsweise als Bereich vorgegebenen Abstands vom Fahrzeug sein.

In einer weiteren Ausgestaltung der Erfindung ist vorgesehen, dass wenigstens abhängig von der Erfassung des Sensors eine Zustandsgröße ermittelt, die den Zustand wenigstens eines Teils des Innenraums des Kraftfahrzeugs repräsentiert. Die Freigabe geschieht dann abhängig von der Zustandsgröße. Bei dieser Ausgestaltung ist als Sensor insbesondere an eine Innenraumkamera gedacht. Die Freigabe geschieht dann abhängig davon, ob sich eine Person im Innenraum des Fahrzeugs befindet und/oder sich Gegenstände im Innenraum in vorgebbarer Weise befinden.

Gemäß der vorliegenden Erfindung wird zur Freigabe des Zugangs das unmittelbare Umfeld und oder der Innenraum des Kraftfahrzeugs dahingehend überprüft, ob eine sichere Zustellung gewährleistet ist.

In Reaktion auf die erfindungsgemäße Freigabe kann die Übermittlung einer Warensendung in den Innenraum des Kraftfahrzeugs freigegeben werden.

In Reaktion auf die erfindungsgemäße Freigabe kann wenigstens eine Öffnung zum Fahrzeuginnenraum geöffnet werden. Hierzu wird beispielsweise das Dach und/oder der Kofferraum und/oder die Heckklappe des Kraftfahrzeugs geöffnet.

Bei den erfindungsgemäßen Sensoren handelt es sich um wenigstens ein Radar-, LIDAR-, Ultraschall-, Infrarot-Sensor und/oder um ein Videosystem. Solche Sensoren können im Fahrbetrieb des Kraftfahrzeugs zur Fahr-bzw. Fahrerassistenz und/oder zu Sicherheitsfunktionen verwendet werden. Da der Ausstattungsgrad bei modernen Kraftfahrzeugen relativ hoch ist, erfordert die Erfindung keinen besonderen Zusatzaufwand für die Sensorik.

Dies ist besonders vorteilhaft, wenn die Freigabe erfindungsgemäß dann geschieht, wenn das Fahrzeug sich im Stillstand befindet, die Sensorik zur Fahr-bzw. Fahrerassistenz und/oder zu Sicherheitsfunktionen also nicht benötigt wird.

Erfindungsgemäß ist auch ein Verfahren zur Übermittlung von Warensendungen mit der erwähnten erfindungsgemäßen Vorrichtung zur Freigabe eines Zugangs zu einem Innenraum eines Kraftfahrzeugs vorgesehen. Dazu erfolgt in Reaktion auf eine nicht erfolgte Freigabe eine Übermittlung an einen alternativen Ort.

Erfindungsgemäß ist auch eine Vorrichtung zur Freigabe eines Zugangs zu einem Innenraum eines Kraftfahrzeugs vorgesehen. Hierbei weist das Kraftfahrzeug wenigstens einen, das Umfeld und/oder der Innenraum des Kraftfahrzeugs erfassende Sensor auf. Der Kern der Erfindung besteht darin, dass Mittel vorgesehen sind, mittels der die Freigabe wenigstens abhängig von der Erfassung des Sensors geschieht. In Reaktion auf eine Freigabe des Zugangs kann dann eine Warensendung in den Innenraum des Kraftfahrzeugs übermittelt werden.

Auch bei der erfindungsgemäßen Vorrichtung ist in einer ersten Ausgestaltung der Erfindung vorgesehen, dass wenigstens abhängig von der Erfassung des Sensors eine Gefahrengröße ermittelt wird, die die Gefahr für einen unberechtigten Zugriff auf eine in das Kraftfahrzeug zu übermittelnde Warensendung und/oder auf den Innenraum des Kraftfahrzeugs repräsentiert. Die Freigabe geschieht dann abhängig von der Gefahrengröße. Die Gefahrengröße kann dabei die Präsenz von Personen im Umfeld des Kraftfahrzeug des Kraftfahrzeugs repräsentiert. Das Umfeld kann dabei vorgegeben sein, beispielsweise als Bereich vorgegebenen Abstands vom Fahrzeug sein.

In einer weiteren Ausgestaltung der erfindungsgemäßen Vorrichtung ist vorgesehen, dass wenigstens abhängig von der Erfassung des Sensors eine Zustandsgröße ermittelt, die den Zustand wenigstens eines Teils des Innenraums des Kraftfahrzeugs repräsentiert. Die Freigabe geschieht dann abhängig von der Zustandsgröße. Bei dieser Ausgestaltung ist als Sensor insbesondere an eine Innenraumkamera gedacht. Die Freigabe geschieht dann abhängig davon, ob sich eine Person im Innenraum des Fahrzeugs befindet und/oder sich Gegenstände im Innenraum in vorgebbarer Weise befinden.

Weitere vorteilhafte Ausgestaltungen sind den Unteransprüchen zu entnehmen.

### Zeichnungen

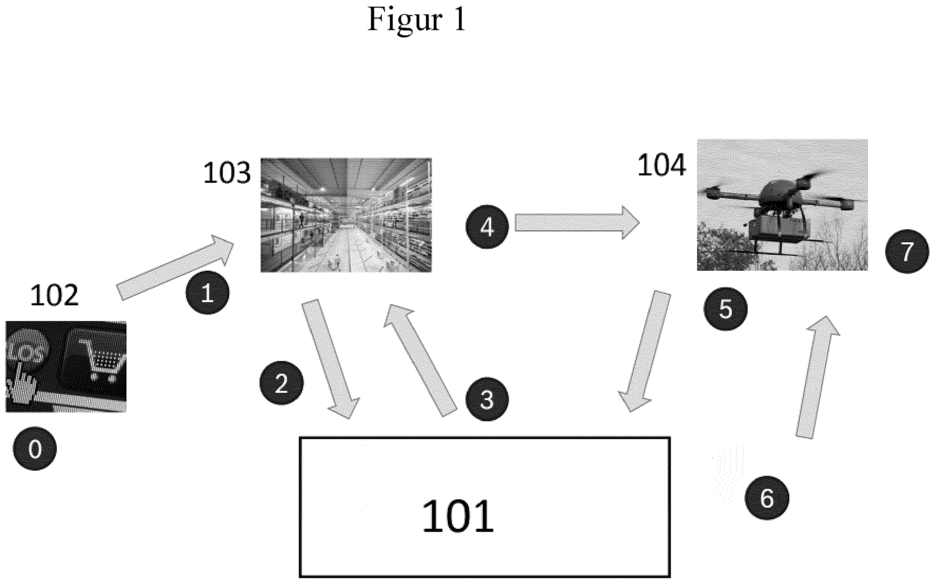

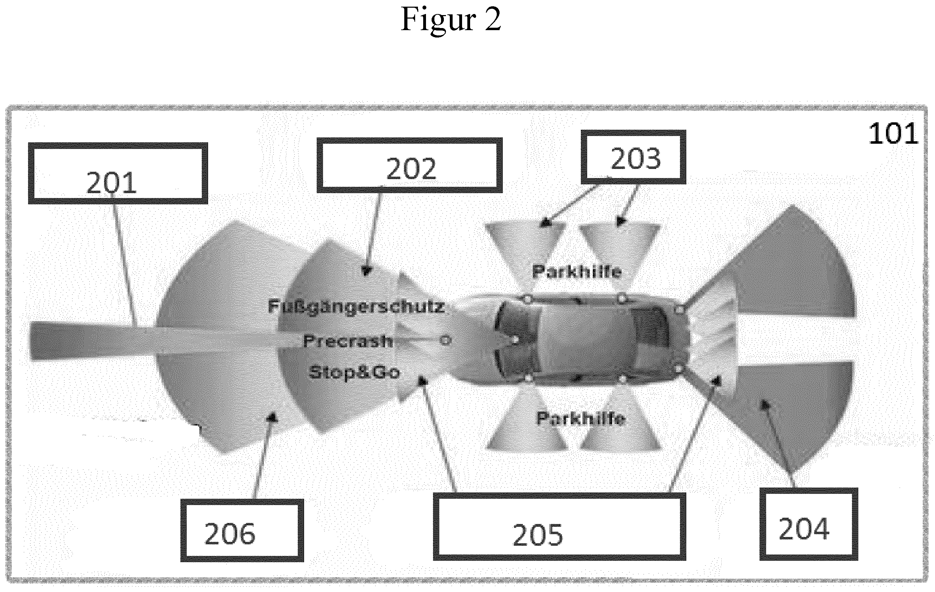

Nachfolgend werden Ausführungsbeispiele der Erfindung anhand von Zeichnungen erläutert. Es zeigen
Fig. 1 zeigt eine Übersichtsdarstellung einer Ausführungsform der Erfindung während in der Figur 2 die Sensorik des Kraftfahrzeugs im Detail darstellt.

### Beschreibung von Ausführungsbeispielen

Die Figur 1 zeigt mit den Bezugszeichen 102 (Schritt 0) einen Bestellvorgang 1 einer Ware, der in der Regel über das Internet stattfindet. Der Besteller wählt dabei aus verschiedenen möglichen Auslieferungs- bzw. Zustellformen aus. Kern der hier dargestellten Ausführungsform der Erfindung ist die Zustellung der Ware mit einem unbemannten Fluggerät, auch als Drohne oder Quadrocopter bekannt, an bzw. in ein bestimmtes Kraftfahrzeug 101.

Im Schritt 2 wird dann die Bestellung vom Lieferanten 103 bearbeitet. Dazu wird beispielsweise ein Zeitfenster zur Übergabe der Ware an bzw. in das Kraftfahrzeug 101 mitgeteilt oder vereinbart.

Im Schritt 3 übermittelt das Kraftfahrzeug 101 vor und/oder während der Auslieferung der Ware seinen genauen Positionsdaten an den Lieferanten 103 oder an das direkt an das Fluggerät 104. Die Positionsdaten können dabei über GPS (Global Positioning System) ermittelt werden.

Der Lieferant 103 veranlasst dann im Schritt 4 die Zustellung der Ware mittels des Fluggeräts 104 an das Kraftfahrzeug mit den übermittelten Positionsdaten, die beispielsweise auch während der Zustellung aktualisiert werden können.

Hat das Fluggerät 104 das Kraftfahrzeug 101 erreicht, so fordert es im Schritt 5 die Freigabe zum Abladen der Ware in das Kraftfahrzeug 101 an.

Daraufhin prüft das Kraftfahrzeug mittels der in dem Kraftfahrzeug verbauten Umfeldsensorik im Schritt 6, ob und welchem Zeitfenster die Übergabe der Ware sicher stattfinden kann. Dies kann beispielsweise innerhalb eines entsprechenden Zeitfensters dann sein, wenn sich keine Person im Umkreis von ca. 5 Meter des Kraftfahrzeugs befindet. Darüber hinaus kann durch eine geeignete Sensierung des Fahrzeuginnenraums auch geprüft werden, ob der Zustellung der Ware keine Insassen oder andere im Fahrzeug befindliche Gegenstände entgegenstehen.

Im Schritt 7 wird dem Fluggerät 104 vom Kraftfahrzeug 101 eine Freigabe erteilt, wobei das Kraftfahrzeug eine Öffnung des Kraftfahrzeugs, beispielweise eine Schiebedach oder einen Kofferraumdeckel öffnet. Nach Übergabe der Ware in das Kraftfahrzeug schließt das Kraftfahrzeug die Öffnung wieder. Dies kann zeitgesteuert (Öffnung innerhalb einer bestimmten Zeit) oder ereignisgesteuert (Erhalt und/oder Lieferung der Ware wird erkannt) geschehen.

Die Figur 2 zeigt beispielhaft eine Sensoranordnung eines Kraftfahrzeugs, wie sie bereits heute umfangreich im Serieneinsatz zur Realisierung von Fahrassistenzfunktionen ist. Die in der Figur 2 gezeigten Schattierungen zeigen dabei schematisch die Erfassungsbereiche der einzelnen Sensoren.

Ein sogenanntes Long Range Radar (LRR, 77 GHz) ist im vorderen Fahrzeugbereich angebracht und dient im Fahrbetrieb beispielsweise zu einem Adaptive/Automatic Cruise Control (ACC). IR-Sensoren 202 sind zur Umsetzung der Funktionalität eines Fußgängerschutzes, Precrash und/oder Stop&Go vorgesehen. Seitenkameras 203 und/oder seitlich angeordnete Ultraschallsensoren werden zur Einparkhilfe verwendet. Weiterhin sind in der Regel im hinteren und/oder vorderen Fahrzeugbereich Ultraschallsensoren 204 zur Parkassistenz verbaut. Durch eine sogenanntes Mid Range Radar 205 (UMRR, 24 GHz) kann eine Totwinkelüberwachung stattfinden. Weiterhin kann im vorderen Fahrzeugbereich eine Videokamera 206 zur Realisierung verschiedensten Fahrassistenzfunktionen verbaut sein. Weiterhin kann vorgesehen sein, dass der Fahrzeuginnenraum durch eine Innenkamera oder sonstige Gegenstände/Personen erfassende Sensorik überwacht wird.

Kern der Erfindung gemäß diesem Ausführungsbeispiel ist es, die Voraussetzung am Lieferort z.B. Fahrzeug 101 zu schaffen, z.B. durch Öffnen des Schiebedachs, unter Berücksichtigung von:
- Bestell- und Lieferbedingungen (Schritt 0)
- Festlegung des Liefertermins (z.B. Zeitfenster der Übergabe, Diebstahlschutz), (Schritt 1)
- Lieferort (Fahrzeugidentifikation), (Schritte 1 bis 5)
- Umfeld des Lieferortes z.B. Fahrzeug (Diebstahlschutz), (Schritt 6)
- Fahrzeuginnenraum (Insassenschutz) (Schritt 6)
- Identifikation des Lieferanten (Schritt 5)
- Bestätigung der Auslieferung durch den Lieferanten und des Fahrzeuges
- Quittierung des Erhalts der Lieferung durch z.B. elektronische Unterschrift (z.B. Digitale Signatur) über das Fahrzeug

Die in der Figur gezeigten Schritte 0 bis 7 in einer kurzen Zusammenfassung:
0. Der Besteller tätigt die Bestellung z.B. bei Internethändler.
1. Der Besteller wählt die Auslieferung per Quadrocopter z.B. an sein Fahrzeug oder eine Alternative.
2. Vom Auslieferer wird ein Zeitfenster für die Übergabe an das Fahrzeug über z.B. GSM mitgeteilt.
3. Das Fahrzeug meldet seine Positionsdaten z.B. über GSM an den Auslieferer.
4. Die Ware wird z.B. per Quadrocopter zur Abladestelle z.B. Position des Fahrzeugs geflogen.
5. Der Quadrocopter erbitte Freigabe vom Fahrzeug für das Abladen der Ware.
6. Die Fahrzeug ermittelt mittels Sensorik z.B. Radar-, LIDAR-, Ultraschall-, InfrarotSensoren oder Videosysteme das Umfeld von beispielsweise 5 m und schätzt die Si-tuation auf Basis eines Gefahrenmodells ab (wie viele Personen im Umfeld, Gefahren-potential der Gegend, Umgebung).
7. Wenn die Situation als sicher eingestuft wird z.B. keinen Personen im Umkreis von 5m erteilt das Fahrzeug die Freigabe und sendet diese an den Quadrocopter und öffnet z.B. das Schiebedach oder den Kofferraum und schließt wieder nachdem das Paket abgesetzt wurde. Die Freigabe kann zusätzlich durch den Einsatz von RFIDs unterstützt werden, um eine eindeutige Lieferung (Erkennung und Bestätigung der Ware) zu ermöglichen.

Die erfolgreiche Übergabe wird dem Besteller mitgeteilt.

Desweiteren ist es möglich eine Kommunikation zwischen mehreren Abladestellen zuzulassen. Ist eine bereits belegt, wird die nächste automatisiert angeflogen. Anhang:

## Patentansprüche

1. Verfahren zur Freigabe eines Zugangs zu einem Innenraum eines Kraftfahrzeugs (101), wobei das Kraftfahrzeug (101) wenigstens einen, das Umfeld und/oder den Innenraum des Kraftfahrzeugs erfassenden Sensor (201-206) aufweist, und auf eine von außerhalb des Kraftfahrzeugs kommende Freigabeanforderung (5) die Freigabe wenigstens abhängig von der Erfassung des Sensors (201-206) geschieht, **dadurch gekennzeichnet, dass** wenigstens abhängig von der Erfassung des Sensors (201-206)
- eine Gefahrengröße ermittelt wird, die die Gefahr für einen unberechtigten Zugriff auf eine in das Kraftfahrzeug zu übermittelnde Warensendung und/oder auf den Innenraum des Kraftfahrzeugs repräsentiert, und/oder
- eine Zustandsgröße ermittelt wird, die den Zustand wenigstens eines Teils des Innenraums des Kraftfahrzeugs repräsentiert, und
die Freigabe (5) abhängig von der Gefahrengröße und/oder der Zustandsgröße geschieht.

2. Verfahren nach Anspruch 1, **dadurch gekennzeichnet, dass** in Reaktion auf eine Freigabe (5) des Zugangs eine Warensendung in den Innenraum des Kraftfahrzeugs übermittelt wird.

3. Verfahren nach Anspruch 1, **dadurch gekennzeichnet, dass** in Reaktion auf eine Freigabe (5) des Zugangs wenigstens eine Öffnung zum Fahrzeuginnenraum geöffnet wird.

4. Verfahren nach Anspruch 1, **dadurch gekennzeichnet, dass** der Sensor (201-206) wenigstens ein Radar-, LIDAR-, Ultraschall-, Infrarot-Sensor und/oder ein Videosystem ist.

5. Verfahren nach Anspruch 1, **dadurch gekennzeichnet, dass** die Freigabe (5) nur bei einem still stehenden Kraftfahrzeug (101) geschieht.

6. Verfahren nach Anspruch 1 oder 4, **dadurch gekennzeichnet, dass** der Sensor (201-206) im Fahrbetrieb des Kraftfahrzeugs zu Fahrassistenz- und/oder Sicherheitsfunktionen verwendet wird.

7. Vorrichtung zur Freigabe eines Zugangs zu einem Innenraum eines Kraftfahrzeugs (101), wobei das Kraftfahrzeug wenigstens einen, das Umfeld und/oder der Innenraum des Kraftfahrzeugs erfassende Sensor (201-206) aufweist, wobei Mittel vorgesehen sind, mittels der die Freigabe (5) wenigstens abhängig von der Erfassung des Sensors (201-206) geschieht, **dadurch gekennzeichnet, dass** wenigstens abhängig von der Erfassung des Sensors (201-206)
- eine Gefahrengröße ermittelt wird, die die Gefahr für einen unberechtigten Zugriff auf eine in das Kraftfahrzeug zu übermittelnde Warensendung und/oder auf den Innenraum des Kraftfahrzeugs repräsentiert, und/oder
- eine Zustandsgröße ermittelt, die den Zustand wenigstens eines Teils des Innenraums des Kraftfahrzeugs repräsentiert, und
die Freigabe (5) abhängig von der Gefahrengröße und/oder der Zustandsgröße geschieht.

8. Vorrichtung nach Anspruch 7, **dadurch gekennzeichnet, dass** in Reaktion auf eine Freigabe (5) des Zugangs eine Warensendung in den Innenraum des Kraftfahrzeugs übermittelt wird.

9. Verfahren zur Übermittlung von Warensendungen mit einer Vorrichtung zur Freigabe eines Zugangs zu einem Innenraum eines Kraftfahrzeugs (101) nach Anspruch 7, wobei in Reaktion auf eine nicht erfolgte Freigabe eine Übermittlung an einen alternativen Ort erfolgt.

## Claims

1. Method for enabling access to a passenger compartment of a motor vehicle (101), wherein the motor vehicle (101) includes at least one sensor (201 to 206) detecting the surroundings and/or the passenger compartment of the motor vehicle, and, in response to an authorization request (5) coming from outside the motor vehicle, the authorization takes place at least as a function of the detection by the sensor (201 to 206), **characterized in that**, at least as a function of the detection by the sensor (201 to 206),
- a risk level is ascertained which represents the risk of unauthorized access to a consignment of goods to be conveyed into the motor vehicle and/or to the passenger compartment of the motor vehicle, and/or
- a state variable is ascertained which represents the state of at least a portion of the passenger compartment of the motor vehicle, and
the authorization (5) takes place as a function of the risk level and/or the state variable.

2. Method according to Claim 1, **characterized in that** in response to enabling (5) the access, a consignment of goods is conveyed into the passenger compartment of the motor vehicle.

3. Method according to Claim 1, **characterized in that** in response to enabling (5) the access, at least one opening to the vehicle passenger compartment is opened.

4. Method according to Claim 1, **characterized in that** the sensor (201 to 206) is at least one radar sensor, lidar sensor, ultrasound sensor, infrared sensor, and/or a video system.

5. Method according to Claim 1, **characterized in that** the authorization (5) takes place only in the case of a stationary motor vehicle (101).

6. Method according to Claim 1 or 4, **characterized in that** the sensor (201 to 206) is used during driving operation of the motor vehicle for driving assistance and/or safety functions.

7. Device for enabling access to a passenger compartment of a motor vehicle (101), wherein the motor vehicle includes at least one sensor (201 to 206) detecting the surroundings and/or the passenger compartment of the motor vehicle, wherein means are provided via which the authorization (5) takes place at least as a function of the detection by the sensor (201 to 206), **characterized in that**, at least as a function of the detection by the sensor (201 to 206),
- a risk level is ascertained which represents the risk of unauthorized access to a consignment of goods to be conveyed into the motor vehicle and/or to the passenger compartment of the motor vehicle, and/or
- a state variable is ascertained which represents the state of at least a portion of the passenger compartment of the motor vehicle, and
the authorization (5) takes place as a function of the risk level and/or the state variable.

8. Device according to Claim 7, **characterized in that** in response to enabling (5) the access, a consignment of goods is conveyed into the passenger compartment of the motor vehicle.

9. Method for conveying consignments of goods including a device for enabling access to a passenger compartment of a motor vehicle (101), according to Claim 7, wherein a conveyance to an alternative location takes place in response to an unsuccessful authorization.

## Revendications

1. Procédé pour libérer un accès à un espace intérieur d'un véhicule automobile (101), le véhicule automobile (101) possédant au moins un capteur (201-206) qui détecte l'environnement et/ou l'espace intérieur du véhicule automobile, et la libération sur une demande de libération (5) en provenance de l'extérieur du véhicule automobile s'effectuant au moins en fonction de la détection par le capteur (201-206), **caractérisé en ce qu'**au moins en fonction de la détection par le capteur (201-206)
- une grandeur de danger est déterminée, laquelle représente le danger d'un accès non autorisé à un envoi de marchandises à transmettre dans le véhicule automobile et/ou à l'espace intérieur du véhicule automobile et/ou
- une grandeur d'état est déterminée, laquelle représente l'état d'au moins une partie de l'espace intérieur du véhicule automobile, et
la libération (5) a lieu en fonction de la grandeur de danger et/ou de la grandeur d'état.

2. Procédé selon la revendication 1, **caractérisé en ce qu'**un envoi de marchandises dans l'espace intérieur du véhicule automobile est transmis en réaction à une libération (5) de l'accès.

3. Procédé selon la revendication 1, **caractérisé en ce qu'**au moins une ouverture vers l'espace intérieur du véhicule est ouverte en réaction à une libération (5) de l'accès.

4. Procédé selon la revendication 1, **caractérisé en ce que** le capteur (201-206) est au moins un capteur radar, LIDAR, ultrasonique, infrarouge et/ou un système vidéo.

5. Procédé selon la revendication 1, **caractérisé en ce que** la libération (5) a seulement lieu lorsque le véhicule automobile (101) est à l'arrêt.

6. Procédé selon la revendication 1 ou 4, **caractérisé en ce que** dans le mode de déplacement du véhicule automobile, le capteur (201-206) est utilisé pour des fonctions d'assistance à la conduite et/ou de sécurité.

7. Dispositif pour libérer un accès à un espace intérieur d'un véhicule automobile (101), le véhicule automobile possédant au moins un capteur (201-206) qui détecte l'environnement et/ou l'espace intérieur du véhicule automobile, des moyens étant présents à l'aide desquels la libération (5) s'effectue au moins en fonction de la détection par le capteur (201-206), **caractérisé en ce qu'**au moins en fonction de la détection par le capteur (201-206)
- une grandeur de danger est déterminée, laquelle représente le danger d'un accès non autorisé à un envoi de marchandises à transmettre dans le véhicule automobile et/ou à l'espace intérieur du véhicule automobile et/ou
- une grandeur d'état est déterminée, laquelle représente l'état d'au moins une partie de l'espace intérieur du véhicule automobile, et
la libération (5) a lieu en fonction de la grandeur de danger et/ou de la grandeur d'état.

8. Dispositif selon la revendication 7, **caractérisé en ce qu'**un envoi de marchandises dans l'espace intérieur du véhicule automobile est transmis en réaction à une libération (5) de l'accès.

9. Procédé de transmission d'envois de marchandises avec un dispositif pour libérer un accès à un espace intérieur d'un véhicule automobile (101) selon la revendication 7, une transmission à un endroit alternatif étant effectuée en réaction à une libération non effectuée.
